# EUROPEAN PATENT APPLICATION

(11) **EP 3 255 303 A1**
(43) Date of publication of application: **13.12.2017**
(21) Application number: 16746287.8
(22) Date of filing: 26.01.2016
(51) Int. Cl.: F16F 15/04, E04H 9/02, F16F 1/40

(54) **SEISMIC BASE ISOLATION SUPPORT APPARATUS**

(30) Priority: 02.02.2015 JP 2015018901
(71) Applicant: Oiles Corporation, Tokyo 108-0075 (JP)
(72) Inventor: WAKE, Tomotaka, Ashikaga-shi Tochigi 326-0327 (JP); NAGATA, Shuichi, Ashikaga-shi Tochigi 326-0327 (JP)
(74) Representative: J A Kemp
(86) International application number: PCT/JP2016/000381
(87) International publication number: WO 2016/125454

(57) **Abstract**

A seismic base isolation support apparatus 1 includes: a laminated body 4 in which elastic layers 2 and rigid layers 3 are alternately laminated; a circularly columnar body 7 which is disposed in a hollow portion 6 of the laminated body 4; an outer peripheral protective layer 9 covering an outer peripheral surface 8 of the laminated body 4; an upper mounting plate 11 and a lower mounting plate 12 which are respectively connected to an uppermost rigid layer 3 of the rigid layers 3 and a lowermost rigid layer 3 of the rigid layers 3 by means of bolts 10; a shear key 15 which is fittingly secured in a recess 13 of the uppermost rigid layer 3 and a recess 14 of the upper mounting plate 11; and a shear key 18 which is fittingly secured in a recess 16 of the lowermost rigid layer 3 and a recess 17 of the lower mounting plate 12.

## Description

### TECHNICAL FIELD

The present invention relates to an apparatus which is disposed between two structures to absorb relative horizontal vibrational energy between both structures and thereby reduce vibration acceleration applied to the structure, and more particularly to a seismic base isolation support apparatus which reduces seismic input acceleration by attenuating seismic energy to prevent the destruction of a structure such as a building, a bridge, or the like.

### BACKGROUND ART

As is known from Patent documents 1, 2 and 3, a seismic base isolation support apparatus including a laminated body, in which elastic layers and rigid layers are alternately laminated, and a lead plug filled in a circularly columnar hollow portion defined by an inner peripheral surface of the laminated body, is installed between the ground and a structure such that after the load of the structure is supported, the transmission of the ground vibrations to the structure due to an earthquake or the like is prevented as practically as possible by the laminated body, and the vibrations transmitted to the structure are attenuated as speedily as possible by the lead plug.

Such a seismic base isolation support apparatus is adapted to absorb vibrational energy as the lead plug also undergoes plastic deformation when the laminated body undergoes shear deformation during an earthquake, and the lead plug used extremely excels as a vibrational energy absorbing body since the lead plug satisfactorily absorbs vibrational energy, is easily recrystallized by heat generated in conjunction with the absorption of vibrational energy even after the plastic deformation, and does not cause mechanical fatigue.

### PRIOR ART DOCUMENTS

### PATENT DOCUMENTS

- Patent Document 1:: JP-B-61-17984
- Patent Document 2:: JP-A-9-105440
- Patent Document 3:: JP-A-2000-346132
- Patent Document 4:: JP-A-63-268837

### SUMMARY OF THE INVENTION

### PROBLEMS THAT THE INVENTION IS TO SOLVE

However, it is pointed out that when the seismic base isolation support apparatus is subjected to long-period ground motion which is repeated for a long period with large amplitudes, a temperature rise occurs in the lead plug in conjunction with vibrational energy absorption due to plastic deformation, and the temperature rise can possibly rise to a vicinity of the melting point of lead. When the lead plug undergoes a temperature rise, not only does the vibrational energy absorbing capability of the lead plug with respect to deformation decline, but a deterioration can possibly occur in the material property value, particularly the modulus of elasticity, of the elastic layers of the laminated body in contact with the lead plug.

In order to prevent the temperature rise of lead, in, for example, Patent Document 4 there has been proposed a technique in which, by dispersedly disposing a metal having a lower melting point than lead, a so-called a low-melting-point metal in the lead member as a heat absorbent material, heat generated from the lead member is absorbed as the molten heat of the low-melting-point metal during an earthquake, so as to prevent an excessive temperature rise of the lead member, or a technique in which, by dispersedly disposing a liquid (water) in the lead member, heat generated from the lead member is absorbed as heat of vaporization of the liquid during an earthquake, so as to prevent an excessive temperature rise of the lead member.

Nevertheless, in the technique proposed in Patent Document 4, particularly the technique in which a liquid (water) is dispersedly disposed in the lead member, it is necessary to take into consideration the evaporation and leakage of the liquid, and it is difficult to say that this technique is practically feasible with respect to earthquakes for which it is impossible to predict when they occur.

The above-described problem occurs not only with the lead plug but also with a tin plug using tin.

The present invention has been devised in view of the above-described aspects, and its object is to provide a seismic base isolation support apparatus which, when subjected to long-period ground motion, is capable of lowing the temperature rise of the lead plug or the tin plug as practically as possible, and of effectively exhibiting the seismic isolation function even in long-period ground motion.

### MEANS FOR SOLVING THE PROBLEMS

A seismic base isolation support apparatus in accordance with the present invention comprises: a laminated body having a plurality of rigid layers and elastic layers which are alternately laminated; and a columnar body having a columnar lead plug or tin plug and disposed in a columnar hollow portion defined by at least an inner peripheral surface of said laminated body, wherein said laminated body includes, in addition to the rigid layers and the elastic layers, an annular thermal conductor which is interposed between an outer peripheral surface of said columnar body and an annular inner surface of the elastic layer in such a manner as to be in contact with the outer peripheral surface of said columnar body, the annular inner surface of the elastic layer, and at least one surface of a pair of rigid layers sandwiching the elastic layer and having a thermal conductivity higher than that of the elastic layer.

According to the seismic base isolation support apparatus in accordance with the present invention, even when the seismic base isolation support apparatus is subjected to long-period ground motion and a temperature rise has occurred the lead plug or the tin plug in conjunction with vibrational energy absorption, since the heat is effectively radiated by being transmitted to the rigid layers through the thermal conductors interposed between the outer peripheral surface of the columnar body and the annular inner surfaces of the elastic layers, the accumulation of the heat in the lead plug or the tin plug can be avoided. As a result, a decline is not caused in the vibrational energy absorbing capability due to the temperature rise of the lead plug or the tin plug, thereby making it possible to effectively dissipate the seismic energy.

In the present invention, the thermal conductors may be interposed in all the intervals between the rigid layers and the elastic layers; however, in a case where accumulation of the heat of the lead plug or the tin plug can be avoided as desired, the thermal conductor may be interposed in at least one interval between a rigid layer and an elastic layer. Additionally, in a case where the thermal conductors are respectively interposed in a plurality of intervals between the rigid layers and the elastic layers, the thermal conductors need not be interposed consecutively in the laminated direction, and may be interposed, for example, in every other interval or every third interval. Furthermore, in the case where thermal conductors are interposed in all the intervals between the rigid layers and the elastic layers or in a plurality of intervals between the rigid layers and the elastic layers, the thermal conductors need not be in contact with the annular inner surfaces of the elastic layers at the same position, and may be in contact with the annular inner surfaces of the elastic layers at respectively different positions.

In the seismic base isolation support apparatus in accordance with the present invention, in a preferred example, the thermal conductor includes at least a polymer and a filler having a thermal conductivity higher than that of the elastic layer, in which case the polymer includes at least one of a thermosetting polymer and a thermoplastic polymer.

The thermosetting polymer in a preferred example includes at least one of a crosslinked rubber, an epoxy resin, a polyimide resin, a bismaleimide resin, a phenolic resin, an unsaturated polyester, a thermosetting polyphenylene ether, and a thermosetting modified polyphenylene ether.

As the crosslinked rubber, it is possible to cite as preferred examples natural rubber (NA), butadiene rubber, isoprene rubber, nitrile rubber, hydrogenated nitrile rubber, chloroprene rubber, ethylenepropylene rubber, chlorinated polyethylene, chlorosulfonated polyethylene, butyl rubber, halogenated butyl rubber, fluorine rubber, urethane rubber, acryl rubber, polyisobutylene rubber, silicone rubber, and the like.

The thermoplastic polymer may include at least one of a thermoplastic synthetic resin and a thermoplastic elastomer.

The thermoplastic synthetic resin is not particularly limited and may be appropriately selected depending on the intended purpose, and it is possible to cite, for example, polyethylene (PE), polypropylene (PP), an ethylene-α-olefin copolymer such as ethylene-propylene copolymer, polymethyl pentene (PMP), polyvinyl chloride (PVC), polyvinylidene chloride (PVDC), polyvinyl acetate (PVAc), ethylene-vinyl acetate copolymer (EVA), polyvinyl alcohol (PVA), polyacetal (POM), polyvinylidene fluoride (PVDF), polyethylene terephthalate (PET), polybutylene terephthalate (PBT), polyethylene naphthalate (PEN), polystyrene (PS), polyacrylonitrile (PAN), polyamide (PA), polycarbonate (PC), polyphenylene sulfide (PPS), polysulfone (PSU), polyether sulfone (PES), and the like.

As the thermoplastic elastomer, it is possible to cite, for example, styrene-based thermoplastic elastomers such as a styrene-butadiene copolymer or its hydrogenated polymer and a styrene-isoprene block copolymer or its hydrogenated polymer, olefin-based thermoplastic elastomers, vinyl chloride-based thermoplastic elastomers, polyester-based thermoplastic elastomers, polyurethane-based thermoplastic elastomers, polyamide-based thermoplastic elastomers, and the like.

In the present invention, in a preferred example, the filler includes at least one of a carbon-based filler, a metallic filler, and a ceramic filler.

As the carbon-based filler, it is possible to cite furnace black such as Ketjen black, carbon blacks such as acetylene black, channel black, and gas black, carbon fibers such as polyacrylonitrile-based carbon fiber and pitch-based carbon fiber, graphites such as artificial graphite, spherical graphite, scaly graphite, lump graphite, and earthy graphite, diamond, fullerene, carbon micro-coil, a carbon nanotube (vapor-grown carbon fiber), graphene, and the like.

The size of particles of the carbon black or the graphite may be determined by taking into consideration of the dispersibility and the thickness of the thermal conductor. The average particle size of the carbon black is preferably 10 nm to 700 nm, and the average particle size of the graphite is preferably 5 to 150 µm. Further, from the viewpoint of improving fluidity and moldability, the average particle size of the graphite is preferably 30 to 150 µm. As the carbon fiber, it is possible to use chopped fibers with a fiber diameter of 5 to 20 µm and a fiber length of 2 to 8mm, milled fibers with a fiber diameter of 5 to 20 µm and a fiber length of 20 to 400 µm, and the like. In the case of carbon nanotubes, the simple substance of a single-walled nanotube is preferably 1 to 2.5 nm in diameter and 5 to 10 nm in lengthwise direction, and a multi-walled nanotube is preferably 10 to 40 nm in diameter and 10 nm in lengthwise direction.

Specific examples of the Ketjen black include "EC300J and EC600DJ (tradenames)" manufactured by Lion Corporation and the like. Specific examples of the acetylene black include "DENKA BLACK (tradename)" manufactured by Denki Kagaku Kogyo Kabushiki Kaisha, and the like. Specific examples of the scaly graphite include "BF-3AK and CPB-6S (tradenames)" manufactured by Chuetsu Graphite Works Co., Ltd., "UF-2 (tradename)" manufactured by Fuji Graphite Industry Co., Ltd., and the like. Specific examples of the earthy graphite include "APR (tradename)" manufactured by Chuetsu Graphite Works Co., Ltd., "FAG-1 (tradename)" manufactured by Fuji Graphite Industry Co., Ltd., and the like. Specific examples of the artificial graphite include "G-6S (tradename)" manufactured by Chuetsu Graphite Works Co., Ltd. and "FGK-1 (tradename)" manufactured by Fuji Graphite Industry Co., Ltd. Specific examples of the spherical graphite include "WF-15C (tradename)" manufactured by Chuetsu Graphite Works Co., Ltd., "WF-010 and WF-015 (tradenames)" manufactured by Fuji Graphite Industry Co., Ltd., and the like.

Specific examples of the carbon fiber include, among polyacrylonitrile-based carbon fibers, "TORAYCA CHOP (tradename)" manufactured by Toray Industries, Inc., "PYROFIL (tradename)" manufactured by Mitsubishi Rayon Co., Ltd., "Besfight (tradename)" manufactured by Toho Tenax Co., Ltd., and the like. Among the pitch-based carbon fibers, specific examples of the carbon fiber include "DIALEAD (tradename)" manufactured by Mitsubishi chemical Functional Products, Inc., "DONACARBO (tradename)" manufactured by Osaka Gas Chemicals Co., Ltd., "KRECA Chop (tradename)" manufactured by KUREHA CORPORATION, "GRANOC Milled Fiber (tradename)" manufactured by Nippon Graphite Fiber Corporation, and the like.

As the metal-based filler, it is preferable to use one or more kinds of metal powder selected from the group consisting of aluminum, copper, silver, iron, nickel, silicon, zinc, magnesium, tungsten, and tin or an alloy powder of these metals (e.g., aluminum bronze, 7-3 brass, and naval brass). As these metal-based fillers, particulate matter with an average particle size of 0.1 to 200 µm, preferably an average particle size of 0.1 to 50 µm, is suitable. In particular, if the average particle size is less than 0.1 µm, the effect of improving the thermal conductivity becomes inferior, and molding is rendered difficult, so that it is not preferable.

As the ceramic filler, it is possible to cite metal oxides such as aluminum oxide (Al₂O₃), magnesium oxide (MgO), beryllium oxide (BeO), and titanium oxide (TiO₂), metal nitrides such as boron nitride (hexagonal BN or cubic BN), aluminum nitride (AlN), and silicon nitride (Si₃N₄), and metal carbides such as boron carbide (B₄C), aluminum carbide (Al₄C₃), and silicon carbide (SiC), and the like.

If the ceramic filler is constituted of a powder having an average particle size of 3 to 50 µm, preferably 5 to 40 µm, it is desirable from the viewpoint of improved performance of thermal conductivity, heat resistance, and humidity resistance.

The amount of compounding of the filler consisting of at least one of these carbon-based fillers, metallic fillers, and ceramic fillers with the polymer can be selected from a wide range depending on the intended thermal conductivity and strength. In a preferred example, the filler is 20 to 500 parts by mass with respect to 100 parts by mass of the polymer. If the compounding amount of the filler is excessively small, the thermal conductivity of the thermal conductor becomes low, whereas if it is excessively large, processability in the formation of the thermal conductor declines, so that it is not favorable.

Preferably, each of surfaces of the thermal conductor in contact with the respective surfaces of the pair of rigid layers sandwiching the elastic layer has an area of not less than 0.3% and not more than 6% of an area of each of the surfaces of the pair of rigid layers sandwiching the elastic layer.

If the area of the surface of the thermal conductor in contact with each of the surfaces of the pair of rigid layers sandwiching the elastic layer is not less than 0.3% of the area of each of the surfaces of the pair of rigid layers sandwiching the elastic layer, the heat due to the temperature rise occurring in the lead plug or the tin plug can be radiated to the rigid layers through the thermal conductor, and the accumulation of the heat in the lead plug or the tin plug due to the temperature rise can be avoided. On the other hand, if that surface exceeds 6% of the area of each of the surfaces of the pair of rigid layers sandwiching the elastic layer, there is a possibility of lowering the load supporting function in the elastic layers.

The thermal conductor should preferably have a thermal conductivity of at least 1 W/m·K, preferably not less than 10 W/m-K, or more preferably not less than 30 W/m-K so as to allow the heat generated in the lead plug or the tin plug to be radiated speedily to the rigid layers.

In order for the thermal conductor to have a thermal conductivity of 1 W/m-K or more, the filler may be contained at a ratio of 20 to 500 parts by mass with respect to 100 parts by mass of the polymer.

In the seismic base isolation support apparatus in accordance with the present invention, each elastic layer in a preferred example is constituted of a rubber plate formed of a rubber material such as ethylene-propylene rubber, nitrile rubber, butyl rubber, halogenated butyl rubber, chloroprene rubber, natural rubber, isoprene rubber, styrene butadiene rubber, butadiene rubber, or the like.

In the seismic base isolation support apparatus in accordance with the present invention, each of the plurality of rigid layers may have a steel plate and a coating covering this steel plate, preferably the entire surface of the steel plate, and having a thermal conductivity greater than that of the steel plate and a thickness of approximately 0.1 to 20µm, in which case the thermal conductor is disposed in contact with the surface of the coating. Such a coating can be formed by plating such as the electroplating or hot-dip plating of the surface of the steel plate, e.g., zinc plating, aluminum plating, copper plating, tin plating, nickel plating, chrome plating, brass plating, and the like. If each of the plurality of rigid layers has such a steel plate and the coating, the radiation of the heat of the lead plug or the tin plug to the steel plates can be effected speedily through the coatings, the accumulation of heat in the lead plug or the tin plug can be avoided as practically as possible, thereby making it possible to effectively prevent a decline in the vibrational energy absorbing capability due to the temperature rise of the lead plug or the tin plug.

In the seismic base isolation support apparatus in accordance with the present invention, in a preferred example, the columnar body and the lead plug or the tin plug are a circularly columnar body having a cylindrical outer peripheral surface and a circularly columnar lead plug or tin plug. In this case, the hollow portion is also circularly columnar in shape by being defined by the cylindrical inner peripheral surface of the laminated body. Further, said columnar body may include, in addition to the columnar lead plug or tin plug, a tubular rubber coating layer covering an outer peripheral surface of the lead plug or the tin plug and having an outer peripheral surface serving as the outer peripheral surface of said columnar body. If the columnar body has such a rubber coating layer, it is possible to improve the installability of the lead plug or the tin plug into the hollow portion.

The layer thickness of the rubber coating layer consisting of a rubber material equivalent to that of the elastic layer is preferably 0.3 to 0.5 mm. If this layer thickness is less than 0.3 mm, the rubber coating layer fails to play the role of improving the insertability of the lead plug or the tin plug, whereas if this layer thickness exceeds 0.5 mm, there is a possibility of the effective heat transmission from the lead plug or the tin plug to the thermal conductor being hampered by the rubber coating layer.

In the seismic base isolation support apparatus in accordance with the present invention, an outer peripheral protective layer formed of a natural rubber, preferably a rubber material excelling in weather resistance, and covering the outer peripheral surface of the laminated body may be further provided on the outer peripheral surface of the laminated body for the purpose of improving weather resistance and the like.

As the rubber material for the outer peripheral protective layer, a natural rubber may be used, but a rubber-like polymer excelling in weather resistance is preferable, and, for example, butyl rubber, polyurethane, ethylene-propylene rubber, Hypalon, chlorinated polyethylene, ethylene vinyl acetate rubber, and chloroprene rubber are preferable from the viewpoint of weather resistance. If adhesion to the rubber for forming the elastic layer is taken into consideration, butyl rubber, ethylene propylene rubber, and chloroprene rubber are preferable. Such an outer peripheral protective layer may have a layer thickness of 5 to 10 mm or thereabouts.

### ADVANTAGES OF THE INVENTION

According to the present invention, it is possible to provide a seismic base isolation support apparatus which, when subjected to long-period ground motion, is capable of lowing the temperature rise of the lead plug or the tin plug as practically as possible, and of effectively exhibiting the function as the seismic base isolation support apparatus even in long-period ground motion.

### BRIEF DESCRIPTION OF THE DRAWINGS

Fig. 1 is an explanatory vertical cross-sectional view of a preferred embodiment of a seismic base isolation support apparatus in accordance with the present invention;
Fig. 2 is an explanatory cross-sectional view taken in the direction of arrows along lines II - II in Fig. 1;
Fig. 3 is an explanatory enlarged cross-sectional view of an essential portion in Fig. 1; and
Fig. 4 is an explanatory perspective view of a thermal conductor and an elastic layer.

### MODE FOR CARRYING OUT THE INVENTION

Next, a more detailed description will be given of the present invention on the basis of the preferred embodiment shown in the drawings and examples. It should be noted that the present invention is not limited to the embodiment and the examples.

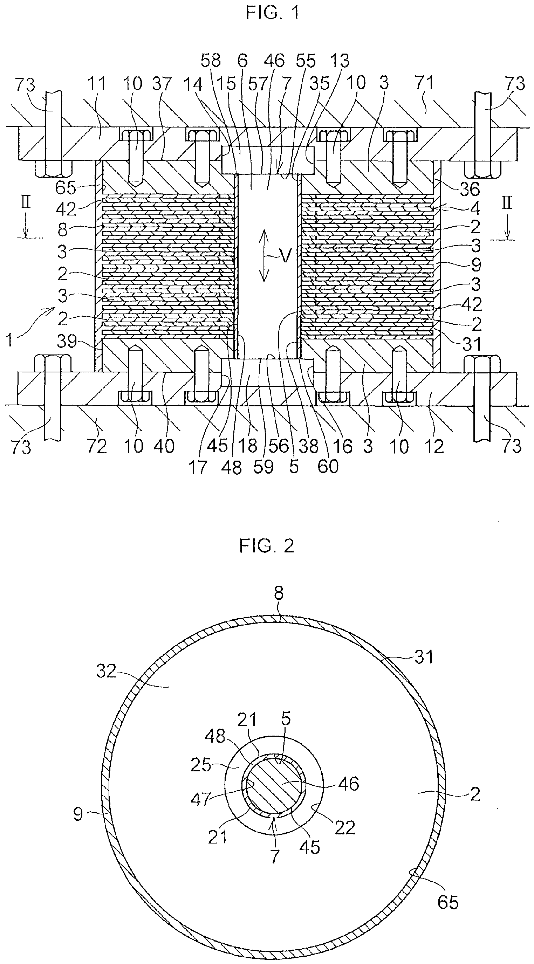

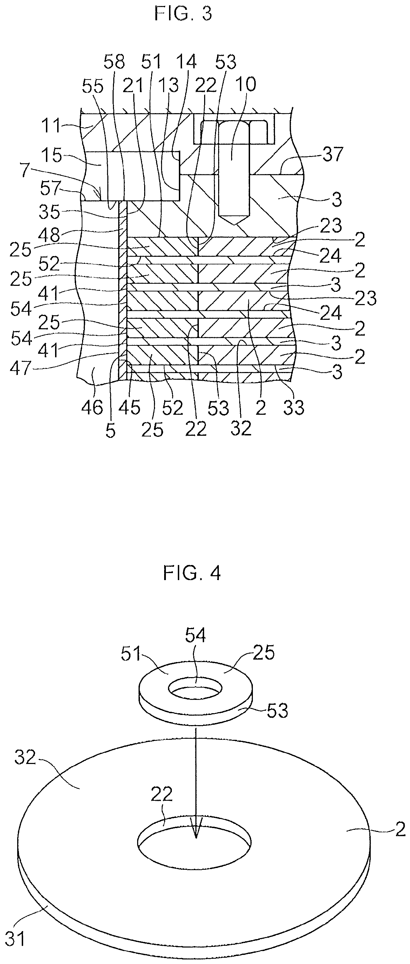

In Figs. 1 to 3, a seismic base isolation support apparatus 1 in accordance with this embodiment is comprised of a cylindrical laminated body 4 in which a plurality of annular elastic layers 2 and a plurality of annular rigid layers 3 are alternately laminated; a circularly columnar body 7 which is densely disposed in a circularly columnar hollow portion 6 defined by a cylindrical inner peripheral surface 5 of the laminated body 4; an outer peripheral protective layer 9 formed of a rubber material excellent in weather resistance and covering a cylindrical outer peripheral surface 8 of the laminated body 4; an upper mounting plate 11 and a lower mounting plate 12 which are respectively connected to an uppermost rigid layer 3 of the rigid layers 3 and a lowermost rigid layer 3 of the rigid layers 3 by means of bolts 10; a disk-shaped shear key 15 which is fittingly secured in a circular recess 13 of the uppermost rigid layer 3 and a circular recess 14 of the upper mounting plate 11; and a disk-shaped shear key 18 which is fittingly secured in a circular recess 16 of the lowermost rigid layer 3 and a circular recess 17 of the lower mounting plate 12.

The laminated body 4 includes, in addition to the elastic layers 2 and the rigid layers 3, ring-like annular thermal conductors 25 which are each interposed between a cylindrical outer peripheral surface 21 of the circularly columnar body 7 in close contact with the inner peripheral surface 5 and a cylindrical inner peripheral surface 22 of each elastic layer 2 in such a manner as to be in close contact with that outer peripheral surface 21 and with an annular lower surface 23 and an annular upper surface 24, i.e., respective surfaces of a pair of rigid layers 3 sandwiching the elastic layer 2, and which have a thermal conductivity higher than that of the elastic layers 2, e.g., a thermal conductivity of at least 1 W/m·K.

Each of the elastic layers 2 is constituted of an annular rubber plate having elasticity and includes, in addition to the inner peripheral surface 22, a cylindrical outer peripheral surface 31, an annular upper surface 32, and an annular lower surface 33. The uppermost and lowermost rigid layers 3 are formed by rigid annular thick-walled steel plates which are thicker than the elastic layers 2 and the rigid layers 3 between the uppermost and lowermost rigid layers 3. The uppermost rigid layer 3 has, in addition to the lower surface 23, a cylindrical inner peripheral surface 35 in close contact with the outer peripheral surface 21 as well as a cylindrical outer peripheral surface 36 and a cylindrical upper surface 37, while the lowermost rigid layer 3 has, in addition to the upper surface 24, a cylindrical inner peripheral surface 38 in close contact with the outer peripheral surface 21 as well as a cylindrical outer peripheral surface 39 and a cylindrical lower surface 40. The rigid layers 3 between the uppermost and lowermost rigid layers 3 are formed by rigid annular thin-walled steel plates which are thinner than the rigid layers 3 of the uppermost and lowermost rigid layers 3, and each have a cylindrical inner peripheral surface 41 and a cylindrical outer peripheral surface 42 in addition to the upper surface 24 and the lower surface 23.

The circularly columnar body 7 includes a lead plug 46 having a cylindrical outer peripheral surface 45 as well as a cylindrical rubber cladding layer 48 cladding at a cylindrical inner peripheral surface 47 thereof the outer peripheral surface 45 in close contact therewith and having the outer peripheral surface 21.

Each of the thermal conductors 25, which contains at least a polymer constituted of at least one of a thermosetting polymer and a thermoplastic polymer as well as a filler having a higher thermal conductivity than that of the elastic layer 2, has an annular upper surface 51 and an annular lower surface 52 in close contact with the lower surface 23 and the upper surface 24, a cylindrical outer peripheral surface 53 in close contact with the inner peripheral surface 22, and a cylindrical inner peripheral surface 54 in close contact with the outer peripheral surface 21.

Each of the upper surface 51 and the lower surface 52, i.e., the surfaces of the thermal conductor 25, which are in contact with the lower surface 23 and the upper surface 24 of each of the pair of rigid layers 3 sandwiching each elastic layer 2, has an area of not less than 0.3% and not more than 6% of the area of each of the lower surface 23 and the upper surface 24 of the pair of rigid layers 3 sandwiching the elastic layer 2. Namely, the upper surface 51 of the thermal conductor 25 has an area of not less than 0.3% and not more than 6% of the area of the lower surface 23 of the rigid layer 3, while the lower surface 52 of the thermal conductor 25 has an area of not less than 0.3% and not more than 6% of the area of the upper surface 24 of the rigid layer 3.

The inner peripheral surface 5 defining the hollow portion 6 is constituted by the inner peripheral surfaces 35 and 38 and the plurality of inner peripheral surfaces 41 and 54. The hollow portion 6 in which the circularly columnar body 7 is densely disposed is defined by a circular lower surface 55 of the shear key 15 and a circular upper surface 56 of the shear key 18 in addition to the inner peripheral surface 5, and the lower surface 55 is in close contact with a circular upper end face 57 of the lead plug 46 and an annular upper end face 58 of the rubber cladding layer 48, whereas the upper surface 56 is in close contact with a circular lower end face 59 of the lead plug 46 and an annular lower end face 60 of the rubber cladding layer 48.

Each elastic layer 2 and each rigid layer 3 are firmly bonded to each other by vulcanization bonding or an adhesive agent at the lower surfaces 33 and 23 thereof and the upper surfaces 24 and 32 thereof; the rubber cladding layer 48 and each rigid layer 3 are firmly bonded to each other by vulcanization bonding or an adhesive agent at the outer peripheral surface 21 thereof and the inner peripheral surfaces 35, 38, and 41 thereof; and the rubber cladding layer 48 and each thermal conductor 25 are firmly bonded to each other by vulcanization bonding or an adhesive agent at the outer peripheral surface 21 thereof and the inner peripheral surface 54 thereof.

The outer peripheral surface 8 of the laminated body 4 is constituted by the plurality of outer peripheral surfaces 31 and 42 and outer peripheral surfaces 36 and 39. The outer peripheral protective layer 9 having a cylindrical inner peripheral surface 65 and each rigid layer 3 are firmly bonded to each other by vulcanization bonding or an adhesive agent at the inner peripheral surface 65 thereof and each outer peripheral surface 42 thereof, and the outer peripheral protective layer 9 and each elastic layer 2 are firmly bonded to each other by vulcanization bonding or an adhesive agent at the inner peripheral surface 65 thereof and each outer peripheral surface 31 thereof. Such an outer peripheral protective layer 9 may be formed integrally with the elastic layers 2 by the extrusion of the elastic layers 2 at the time of pressurized vulcanization of the laminated body 4.

The seismic base isolation support apparatus 1 is connected at the upper mounting plate 11 to a structure 71 and to a foundation 72 at the lower mounting plate 12, respectively, by means of bolts 73, and is used so as to support the load of the structure 71 in a lamination direction (vertical direction) V by means of the laminated body 4 and the circularly columnar body 7.

A description will be given of a method of manufacturing thermal conductors 25.

### (1) Method of Manufacturing Thermal Conductors 25 Using Natural Rubber as Polymer

A thermal conductor composition is fabricated by compounding a crosslinked rubber with at least one of fillers and, as required, a vulcanization accelerator (e.g., thiazole series such as N-cyclohexyl-2-benzothiazyl sulfenamide, 2-mercaptobenzothiazole and dibenzothiazyl disulfide and guanidine series such as diphenylguanidine), a vulcanization accelerator aid [a metal oxide such as zinc oxide (ZnO) or magnesium oxide, or an aliphatic acid such as stearic acid, lauric acid, or palmitic acid], a vulcanizing agent (e.g., sulfur and a sulfur-containing compound), a process oil (e.g., paraffinic, naphthenic, and aromatic series), and an anti-aging agent [such as N-isopropyl-N'-phenyl-P-phenylenediamine or N-(1,3-dimethylbutyl)-N' -phenyl-P-phenylenediamine], and then by subjecting the compounded material to mastication and kneading processes. This thermal conductor composition is subsequently subjected to rolling into an elongated sheet with a uniform thickness and a predetermined width by using a calendar roller, and unvulcanized thermal conductors 25 are cut out from this sheet.

### (2) Method of Manufacturing Thermal Conductors 25 Using Thermosetting Synthetic Resin (Novolac-Type Phenolic Resin) as Polymer

At least one of fillers and, as required, a curing agent, a release agent, and a hardening accelerator are added to and mixed with a novolac-type phenolic resin powder, and a mixture obtained by agitating and mixing them uniformly together with an appropriate amount of a solvent by a mixer such as a Henschel mixer is charged into a kneader. After the kneaded mixture which has been kneaded while being heated is allowed to cool and solidify, a molding material obtained by pulverizing the cooled and solidified kneaded mixture into an appropriate size is subjected to molding to thereby form the thermal conductors 25.

### (3) Method of Manufacturing Thermal Conductors 25 Using Thermoplastic Synthetic Resin or Thermoplastic Elastomer as Polymer

A mixture fabricated by mixing a thermoplastic synthetic resin or a thermoplastic elastomer and at least one of the fillers by a mixer such as a Henschel mixer is extruded into strand form by a screw-type extruder. Pellets of a thermal conductor composition obtained by cutting the extruded strand-form mixture are subjected to molding to thereby form the thermal conductors 25.

Next, a description will be given of a method of manufacturing the seismic base isolation support apparatus 1 including the thermal conductors 25.

### Method of Fabricating Elastic Layers 2

A rubber composition is fabricated by compounding a crosslinked rubber with a vulcanization accelerator, a vulcanization accelerator aid, a vulcanizing agent, a process oil, and an anti-aging agent, and then by subjecting the compounded material to mastication and kneading processes. Subsequently, unvulcanized rubber plates serving as the elastic layers 2 are cut out from an elongated unvulcanized rubber sheet with a uniform thickness and a predetermined width obtained by rolling the rubber composition by using a calendar roller.

### Method of Fabricating Rigid Layers 3

Annular thin-walled steel plates serving as the rigid layers 3 between the uppermost and lowermost rigid layers 3 are fabricated from a thin-walled cold rolled steel plate (SPCC) by press working. Similarly, annular thick-walled steel plates serving as the uppermost and lowermost rigid layers 3 are fabricated from a thick-walled cold rolled steel plate (SPCC) by press working.

### Method of Fabricating Laminated Body 4 and Seismic Base Isolation Support Apparatus 1

The thick-walled steel plate for the lowermost rigid layer 3 with the recess 14 facing down is fittingly inserted, through a through hole defined by the inner peripheral surface 38, over a circularly columnar body provided in a mold, and an adhesive agent is applied to the upper surface 24 of that thick-walled steel plate. As the adhesive agent, a two-liquid adhesive coating type is preferable in which after an undercoat adhesive is applied to the upper surface 24 as a primer, a topcoat adhesive is further applied thereto. Subsequently, an unvulcanized rubber plate for the elastic layer 2 with the thermal conductor 25 fitted in a through hole thereof at a central portion defined by the inner peripheral surface 22 is fittingly inserted, through a through hole defined by the inner peripheral surface 54 of the thermal conductor 25, over the circularly columnar body provided in the mold, and is placed on the upper surface 24 of the thick-walled steel plate for the lowermost rigid layer 3 with the adhesive agent applied thereto. Thereafter, each of the thin-walled steel plates for the rigid layers 3 between the uppermost and lowermost rigid layers 3 with the adhesive agent applied to the lower surface 23 and the upper surface 24, on the one hand, and each of the unvulcanized rubber plates for the elastic layers 2 with the thermal conductors 25 fitted and held thereon, on the other hand, are alternately stacked and fittingly inserted over the circularly columnar body provided in the mold. Finally, the thick-walled steel plate for the uppermost rigid layer 3 with the adhesive agent applied to the lower surface 23 is fittingly inserted over the circularly columnar body provided in the mold, such that the thick-walled steel plate for the uppermost rigid layer 3 is placed on the uppermost unvulcanized rubber plate among the thin-walled steel plates for the rigid layers 3 between the uppermost and lowermost rigid layers 3 and the unvulcanized rubber plates for the elastic layers 2 with the respective thermal conductors 25 fitted and held thereon, which are alternately stacked and fittingly inserted over the circularly columnar body provided in the mold, thereby fabricating the unvulcanized laminated body 4 having the hollow portion 6 defined by the inner peripheral surface 5.

A thin-walled unvulcanized rubber sheet excellent in weather resistance for the outer peripheral protective layer 9 is wound around the outer peripheral surface 8 of the unvulcanized laminated body 4, and an unvulcanized rubber sheet with a thickness of 0.3 to 0.5 mm for the rubber cladding layer 48 is wound on the inner peripheral surface 5 of the unvulcanized laminated body 4.

This unvulcanized laminated body 4 is subjected to heat pressing for 5 to 90 minutes at a temperature of 130 to 180°C under a pressure of 0.5 to 10 MPa to effect vulcanization and mutually vulcanized bonding of the unvulcanized thermal conductors 25, the unvulcanized rubber plates for the elastic layers 2, and the unvulcanized rubber sheets for the outer peripheral protective layer 9 and for the rubber cladding layer 48, to thereby fabricate the vulcanized laminated body 4.

The vulcanized laminated body 4 is removed from the circularly columnar body provided in the mold, and the lead plug 46 is press-fitted in the circularly columnar hollow portion defined by the inner peripheral surface 47 of the rubber cladding layer 48 vulcanization-bonded to the outer peripheral surface 45 by vulcanization. Subsequently, the shear keys 15 and 18 are respectively fitted in the circular recess 13 of the uppermost rigid layer 3 and the recess 16 of the lowermost rigid layer 3, and the upper mounting plate 11 and the lower mounting plate 12 are respectively connected to the uppermost rigid layer 3 and the lowermost rigid layer 3 by means of the bolts 10 to thereby fabricate the seismic base isolation support apparatus 1.

### [Examples]

### Fabrication of Unvulcanized Rubber Sheet for Elastic Layers 2

100 parts by mass of a natural rubber as a crosslinked rubber, 5 parts by mass of a carbon black, 3 parts by mass of zinc oxide, 2 parts by mass of stearic acid, 2 parts by mass of an anti-aging agent [N-(1,3-dimethylbutyl)-N' -phenyl-P-phenylenediamine], and 4 parts by mass of a process oil were charged into a general-purpose kneader, and were kneaded for 5 minutes at a temperature of 140°C at 50 rpm. Then, 2 parts by mass of a vulcanization accelerator
(N-cyclohexyl-2-benzothiazyl sulfenamide) and 1.5 parts by mass of a vulcanizing agent (sulfur) were charged thereinto and were kneaded for 5 minutes at a temperature of 60°C by using an open roll, and the kneaded rubber composition was rolled to thereby fabricate an unvulcanized rubber sheet with a thickness of 5 mm.

### Fabrication of Thin-Walled Steel Plates and Thick-Walled Steel Plates for Rigid Layers 3

As the rigid layers 3 between the uppermost and lowermost rigid layers 3, thin-walled steel plates constituted of cold rolled steel plates (SPCC) each having an outside diameter of 1000 mm and a thickness of 3.9 mm and having in a central portion a through hole defined by the inner peripheral surface 41 with a diameter of 200 mm were prepared. As the uppermost and lowermost rigid layers 3, two thick-walled steel plates constituted of cold rolled steel plates (SPCC) having an outside diameter of 1000 mm and a thickness of 40 mm and respectively having in central portions thereof recesses 13 and 16 with a diameter of 240 mm and having in respective central portions of the recesses 13 and 16 through holes respectively defined by the inner peripheral surfaces 35 and 38 with a diameter of 200 mm were prepared.

### Example 1

100 parts by mass of a natural rubber (NR), 2 parts by mass of stearic acid, 3 parts by mass of zinc oxide, 4 parts by mass of a process oil, and 2 parts by mass of an anti-aging agent [N-(1,3-dimethylbutyl)-N' -phenyl-P-phenylenediamine], and, as fillers, 5 parts by mass of a carbon black and 20 parts by mass of a pitch-based carbon fiber [GRANOC Milled Fiber 'XN-100 (tradename)' manufactured by Nippon Graphite Fiber Corporation, with an average length of 50 µm and an average fiber diameter of 7 µm], were charged into a kneader, and were kneaded for 5 minutes at a temperature of 140°C at 50 rpm. Then, 2 parts by mass of a vulcanization accelerator (N-cyclohexyl-2-benzothiazyl sulfenamide) and 1.5 parts by mass of a vulcanizing agent (sulfur) were charged thereinto and were kneaded for 5 minutes at a temperature of 60°C by using an open roll, and the kneaded thermal conductor composition was rolled into a sheet with a thickness of 5 mm. From this sheet, the unvulcanized thermal conductors 25 each having an outside diameter of 210 mm and a thickness of 5 mm and having a through hole defined by the inner peripheral surface 54 with a diameter of 200 mm were fabricated. Meanwhile, circular rubber plates with a diameter of 1000 mm were cut out from the rubber sheet for the elastic layers 2, and a through hole defined by the inner peripheral surface 22 with a diameter of 210 mm was cut out in the central portion of each of these rubber plates to thereby fabricate unvulcanized rubber plates for the elastic layers 2.

The unvulcanized laminated body 4, which included the unvulcanized thermal conductors 25, the thick-walled steel plates, the elastic layers 2 constituted by 32 unvulcanized rubber plates laminated between the thick-walled steel plates, and the rigid layers 3 constituted by 31 thin-walled steel plates, was formed from the above-described unvulcanized thermal conductors 25, unvulcanized rubber plates for the elastic layers 2, and thin-walled steel plates and thick-walled steel plates for the rigid layers 3, respectively. Further, a 0.5 mm thick unvulcanized rubber plate serving as the rubber cladding layer 48 was adhered to the inner peripheral surface 5 of the unvulcanized laminated body 4. Meanwhile, a 5 mm thick unvulcanized rubber plate having weather resistance and serving as the outer peripheral protective layer 9 was wound around and adhered to the outer peripheral surface 8 of the unvulcanized laminated body 4. The unvulcanized laminated body 4, the unvulcanized rubber plate for the rubber cladding layer 48, and the unvulcanized rubber plate for the outer peripheral protective layer 9 were vulcanization-bonded by heat pressing under conditions including a temperature of 150°C, a pressure of 4 MPa, and a time of 60 minutes, thereby fabricating the laminated body 4, the rubber cladding layer 48, and the outer peripheral protective layer 9. After the fabrication, the lead plug 46 was press-fitted into the space surrounded by the rubber cladding layer 48, and after the press-fitting, the shear keys 15 and 18, the upper mounting plate 11, and the lower mounting plate 12 were mounted to fabricate the seismic base isolation support apparatus 1. The thermal conductors 25 in the fabricated seismic base isolation support apparatus 1 showed a thermal conductivity of 1 W/m·K, and each of the upper surfaces 51 and the lower surfaces 52 thereof occupied 0.4% of the area of each of the lower surfaces 23 and the upper surfaces 24 of the pair of rigid layers 3 sandwiching each thermal conductor 25.

### Example 2

The unvulcanized thermal conductors 25 were fabricated in the same way as in Example 1 except that, as the filler, the pitch-based carbon fiber of Example 1 was compounded in the thermal conductor composition at a ratio of 50 parts by mass. Thereafter, the seismic base isolation support apparatus 1 was fabricated in the same way as in Example 1. The thermal conductors 25 in the fabricated seismic base isolation support apparatus 1 showed a thermal conductivity of 3 W/m·K, and each of the upper surfaces 51 and the lower surfaces 52 thereof occupied 0.4% of the area of each of the lower surfaces 23 and the upper surfaces 24 of the pair of rigid layers 3 sandwiching each thermal conductor 25.

### Example 3

The unvulcanized thermal conductors 25 each having an outside diameter of 312 mm and a thickness of 5 mm and having a through hole defined by the inner peripheral surface 54 with a diameter of 200 mm were fabricated in the same method as in Example 1 except that, as the fillers, 30 parts by mass of the pitch-based carbon fiber of Example 1 and 30 parts by weight of scaly graphite (1) ("PS-99 (tradename)" manufactured by Nishimura Graphite Co., Ltd., with an average particle size of 7 µm) were compounded in the thermal conductor composition. Meanwhile, unvulcanized rubber plates for the elastic layers 2 were fabricated by cutting out circular rubber sheets with a diameter of 1000 mm from the 5 mm thick unvulcanized rubber sheet for the elastic layers 2, and a through hole defined by the inner peripheral surface 22 with a diameter of 312 mm was cut out in the central portion of each of these rubber plates. Thereafter, the seismic base isolation support apparatus 1 was fabricated in the same way as in Example 1. The thermal conductors 25 in the fabricated seismic base isolation support apparatus 1 showed a thermal conductivity of 10 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 4

The thermal conductors 25 and unvulcanized rubber plates for the elastic layers 2 similar to those of Example 3 were fabricated, in which the thermal conductors 25 were fabricated from a thermal conductor composition including 100 parts by mass of a natural rubber (NR), 2 parts by mass of stearic acid, 4 parts by mass of zinc oxide, 5 parts by mass of a heavy aromatic oil, 1 part by mass of an anti-aging agent, 0.5 part by mass of a vulcanization accelerator, and 1.75 parts by mass of a vulcanizing agent (sulfur), and, as fillers, 70 parts by mass of a vapor-grown carbon fiber ("VGCF-X (tradename)" manufactured by Showa Denko K.K.) and 30 parts by mass of a carbon black. Thereafter, the seismic base isolation support apparatus 1 was fabricated in the same way as in Example 1. The thermal conductors 25 in the fabricated seismic base isolation support apparatus 1 showed a thermal conductivity of 2 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 5

The unvulcanized thermal conductors 25 and unvulcanized rubber plates for the elastic layers 2 similar to those of Example 3 were fabricated, in which the thermal conductors 25 were fabricated from 100 parts by mass of a butyl rubber (Polysar Butyl) (IIR) and, as fillers, 50 parts by mass of a carbon black and 15 parts by mass of a pitch-based carbon fiber of Example 1 as well as scaly graphite (2) ("KS15 (tradename)" manufactured by TIMCAL Ltd., with an average particle size of 8 µm). Thereafter, the seismic base isolation support apparatus 1 was fabricated in the same way as in Example 1. The thermal conductors 25 in the fabricated seismic base isolation support apparatus 1 showed a thermal conductivity of 14 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 6

The thermal conductors 25 and unvulcanized rubber plates for the elastic layers 2 similar to those of Example 3 were fabricated, in which the thermal conductors 25 were fabricated from 100 parts by mass of a ethylenepropylene rubber (EPDM), 1 part by mass of stearic acid, 5 parts by mass of zinc oxide, 1.5 parts by mass of a vulcanizing agent (sulfur), 3 parts by mass of a vulcanization accelerator and, as fillers, 40 parts by mass of a carbon black and 96 parts by mass of a hexagonal boron nitride (BN) (manufactured by Denki Kagaku Kogyo Kabushiki Kaisha, with an average particle size of 15 µm). Thereafter, the seismic base isolation support apparatus 1 was fabricated in the same way as in Example 1. The thermal conductors 25 in the fabricated seismic base isolation support apparatus 1 showed a thermal conductivity of 5 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 7

A mixture obtained by mixing 100 parts by mass of a polyacetal resin (POM) and, as fillers, 150 parts by mass of the pitch-based carbon fiber of Example 1 and 30 parts by mass of aluminum oxide (Al₂O₃) (manufactured by Showa Denko K.K.) was extruded into strand form by a screw-type extruder, and the extruded strand-form mixture was cut to fabricate pellets of the thermal conductor composition. In the same way as in Example 1, the seismic base isolation support apparatus 1 was fabricated from the thermal conductors 25 obtained by molding the pellets and similar to those of Example 3 and from the unvulcanized rubber plates for the elastic layers 2 similar to those of Example 3. The thermal conductors 25 in the fabricated seismic base isolation support apparatus 1 showed a thermal conductivity of 2 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 8

In the same way as in Example 1, the seismic base isolation support apparatus 1 was fabricated from the thermal conductors 25 fabricated in the same way as in Example 7 from a mixture of 100 parts by mass of a polyamide resin (PA6) and, as a filler, 22 parts by mass of scaly graphite (3) (manufactured by Nippon Graphite Industries, Co., Ltd., with an average particle size of 130 µm), and from unvulcanized rubber plates for the elastic layers 2 similar to those of Example 3. The thermal conductors 25 in the fabricated seismic base isolation support apparatus 1 showed a thermal conductivity of 5 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 9

In the same way as in Example 1, the seismic base isolation support apparatus 1 was fabricated from the thermal conductors 25 fabricated in the same way as in Example 7 from a mixture of 100 parts by mass of a polyamide resin (PA6) and, as a filler, 132 parts by mass of scaly graphite (3) (manufactured by Nippon Graphite Industries, Co., Ltd., with an average particle size of 130 µm), and from unvulcanized rubber plates for the elastic layers 2 similar to those of Example 3. The thermal conductors 25 in the fabricated seismic base isolation support apparatus 1 showed a thermal conductivity of 20 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 10

In the same way as in Example 1, the seismic base isolation support apparatus 1 was fabricated from the thermal conductors 25 fabricated in the same way as in Example 7 from a mixture of 100 parts by mass of a polyamide resin (PA6) and, as a filler, 203 parts by mass of scaly graphite (3) (manufactured by Nippon Graphite Industries, Co., Ltd., with an average particle size of 130 µm), and from unvulcanized rubber plates for the elastic layers 2 similar to those of Example 3. The thermal conductors 25 in the fabricated seismic base isolation support apparatus 1 showed a thermal conductivity of 30 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 11

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the thermal conductors 25 fabricated in the same way as in Example 7 from a mixture of 100 parts by mass of a polyamide resin (PA6) and, as a filler, 488 parts by mass of magnesium oxide (MgO) (manufactured by Konoshima Chemical Co., Ltd., with an average particle size of 2.4 µm), and from unvulcanized rubber plates for the elastic layers 2 similar to those of Example 3. The thermal conductors 25 in the fabricated seismic base isolation support apparatus 1 showed a thermal conductivity of 4.5 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 12

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the thermal conductors 25 fabricated in the same way as in Example 7 from a mixture of 100 parts by mass of a polyamide resin (PA6) and, as a filler, 203 parts by mass of hexagonal boron nitride (BN), and from unvulcanized rubber plates for the elastic layers 2 similar to those of Example 3. The thermal conductors 25 in the fabricated seismic base isolation support apparatus 1 showed a thermal conductivity of 8.0 W/m-K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 13

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the thermal conductors 25 fabricated in the same way as in Example 7 from a mixture of 100 parts by mass of a polyamide resin (PA 12) and, as fillers, 181 parts by mass of scaly graphite (4) ("CB150 (tradename)" manufactured by Nippon Graphite Industries, Co., Ltd., with an average particle size of 40 µm) and 42 parts by mass of a polyacrylonitrile (PAN)-based carbon fiber ("Besfight (registered trademark)" manufactured by Toho Tenax Co., Ltd., specifically "HTA-C6-NR (tradename) provided with surface treatment with a nylon-based sizing agent), and from unvulcanized rubber plates for the elastic layers 2 similar to those of Example 3. The thermal conductors 25 in the fabricated seismic base isolation support apparatus 1 showed a thermal conductivity of 25 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 14

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the thermal conductors 25 fabricated in the same way as in Example 7 from a mixture of 100 parts by mass of a polybutylene terephthalate resin (PBT) and, as fillers, 50 parts by mass of scaly graphite (2) of Example 5 and 20 parts by mass of the pitch-based carbon fiber of Example 1, and from unvulcanized rubber plates for the elastic layers 2 similar to those of Example 3. The thermal conductors 25 in the fabricated seismic base isolation support apparatus 1 showed a thermal conductivity of 12 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 15

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the thermal conductors 25 fabricated in the same way as in Example 7 from a mixture of 100 parts by mass of a low-hardness styrene-based thermoplastic elastomer and, as fillers, 20 parts by mass of hexagonal boron nitride (BN) of Example 12 and 20 parts by mass of aluminum oxide (Al₂O₃) of Example 7, and from unvulcanized rubber plates similar to those of Example 3. The thermal conductors 25 in the fabricated seismic base isolation support apparatus 1 showed a thermal conductivity of 2 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Example 16

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the thermal conductors 25 and unvulcanized rubber plates for the elastic layers 2 similar to those of Example 1 and from the thin-walled steel plates and thick-walled steel plates for the rigid layers 3 with a 60 µm thick aluminum coating formed on their surfaces by hot dip aluminizing. The thermal conductors 25 in the fabricated seismic base isolation support apparatus 1 showed a thermal conductivity of 1 W/m·K, and each of the upper surfaces 51 and the lower surfaces 52 thereof occupied 0.4% of the area of each of the lower surfaces 23 and the upper surfaces 24 of the pair of rigid layers 3 sandwiching each thermal conductor 25.

### Example 17

In the same way as in Example 1, the seismic base isolation support apparatus 1, which included the elastic layers 2, constituted by 24 rubber plates, and the rigid layers 3, constituted by 23 thin-walled steel plates, between the thick-walled steel plates, was fabricated from the unvulcanized thermal conductors 25 and unvulcanized rubber plates for the elastic layers 2 of Example 3 and from the thin-walled steel plates and thick-walled steel plates for the rigid layers 3 with a 30 µm thick copper coating formed on their surfaces by electroless copper plating. The thermal conductors 25 in the fabricated seismic base isolation support apparatus 1 showed a thermal conductivity of 10 W/m·K, and each of the upper surfaces 51 and the lower surfaces 52 thereof occupied 6% of the area of each of the lower surfaces 23 and the upper surfaces 24 of the pair of rigid layers 3 sandwiching each thermal conductor 25.

### Comparative Examples

As comparative examples, the seismic base isolation support apparatuses 1 were fabricated not by using the thermal conductors 25 in the respective Examples but by using the unvulcanized rubber plates for the elastic layers 2 in the respective Examples each having the through hole defined by the inner peripheral surface 22 with a diameter of 200 mm and in the same way as in the respective Examples as for the rest.

Next, with respect to the seismic base isolation support apparatuses 1 obtained in Examples 1 to 17 and Comparative Examples, a test was conducted on the temperature rise of the lead plug 46 under the below-described test conditions corresponding to a situation in which the seismic base isolation support apparatus 1 is repeatedly subjected a multiplicity of times to horizontal displacement received at the time of a great earthquake and by the below-described test method. The test results are shown in Table 1 to Table 3.

### Test Conditions

Surface pressure: 15 N/mm² (706.9 kN)
Shear strain (y): 250% (120mm)
Frequency: 0.3 Hz
Maximum velocity: 22.6 kine
Exciting frequency: 50 cycles

### Test Method

By using a 300-ton biaxial testing machine, 50 cycles of excitation with sinusoidal waveform shown in the above-described test conditions were carried out, and the temperature of the lead plug 46 after the 50 cycle excitation was measured by a thermocouple sensor attached to the lead plug 46.

By using the value of the temperature of the lead plug 46 of the seismic base isolation support apparatuses 1 in Comparative Examples as 100, the lead plug temperature index in Table 1 to Table 3 represents the temperature rise of the lead plug 46 in Examples 1 to 17 in comparison therewith.

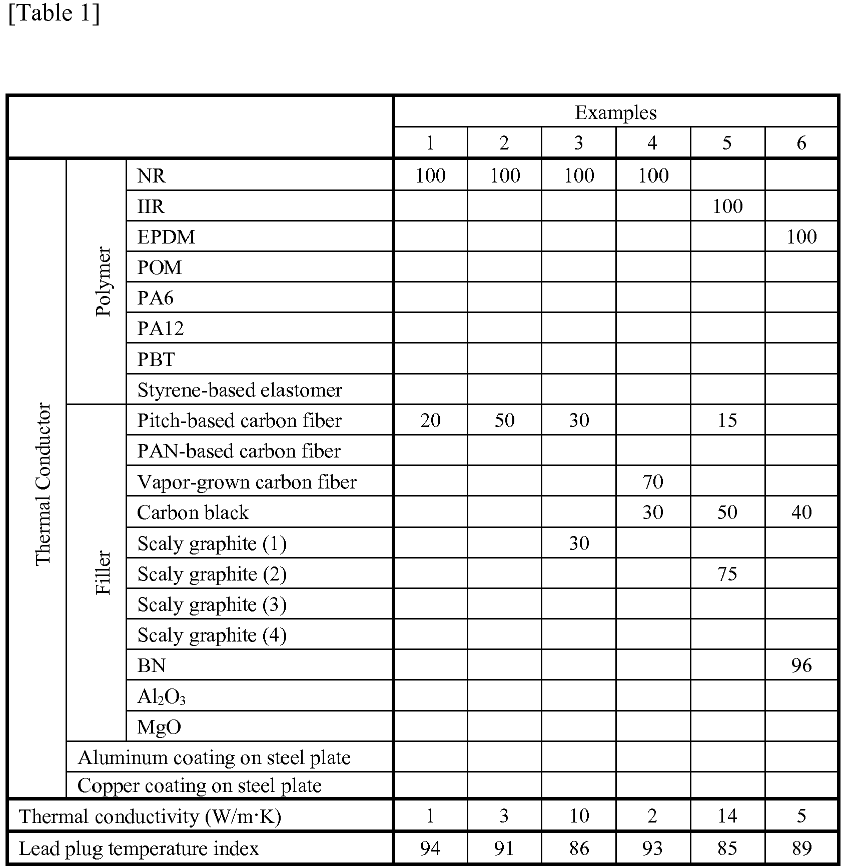

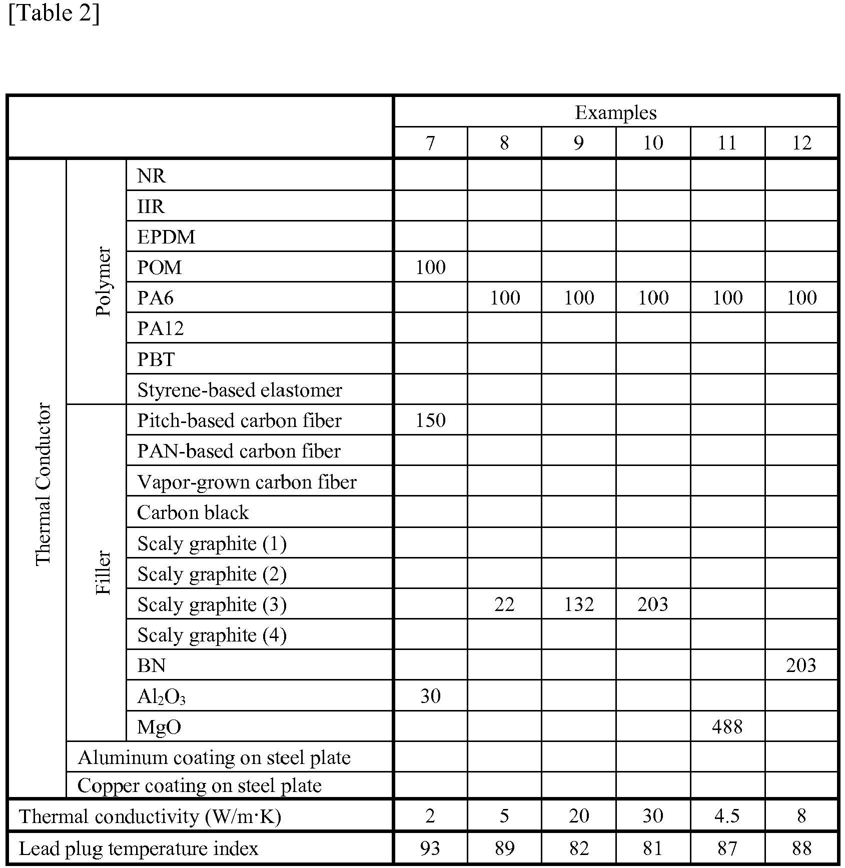

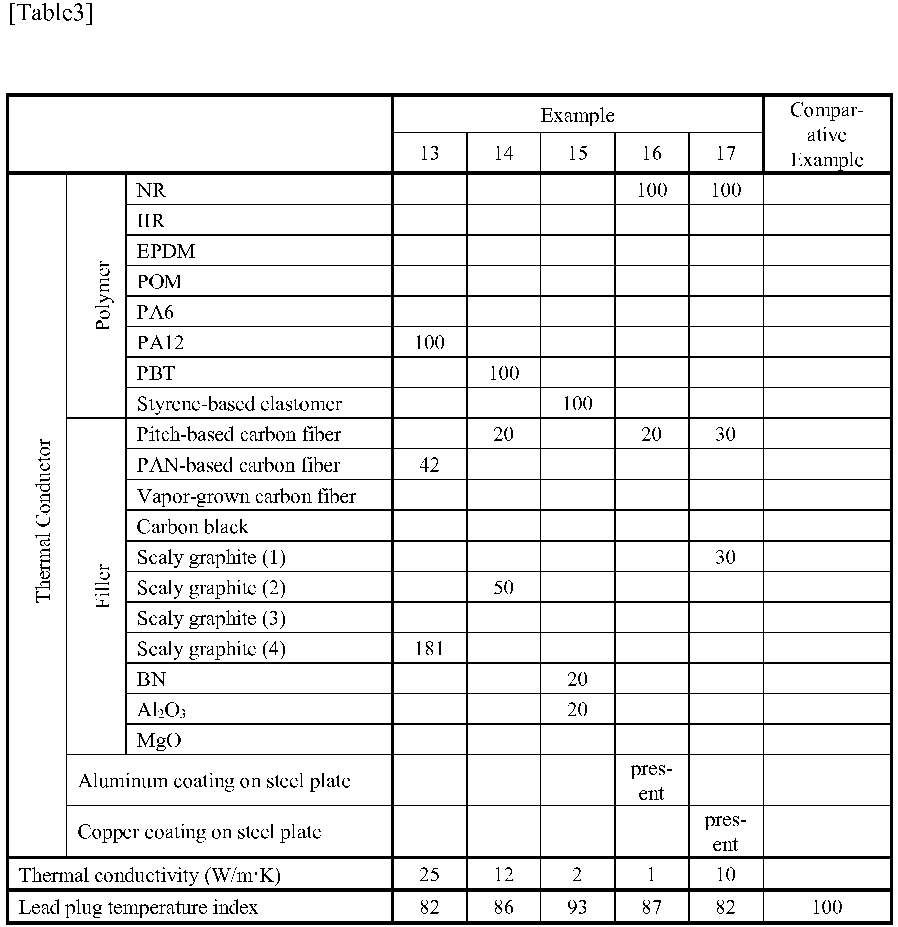

As can be appreciated from the test results, in the seismic base isolation support apparatuses in accordance with the present Examples, since the temperature occurring in the lead plug 46 can be radiated to the rigid layers 3 through the thermal conductors 25, it is possible to prevent an excessive temperature rise of the lead plug 46 of the seismic base isolation support apparatus 1 during an earthquake or the like.

### DESCRIPTION OF REFERENCE NUMERALS

1: seismic base isolation support apparatus
2: elastic layer
3: rigid layer
4: laminated body
5: inner peripheral surface
6: hollow portion
7: circularly columnar body

## Claims

1. A seismic base isolation support apparatus comprising: a laminated body having a plurality of rigid layers and elastic layers which are alternately laminated; and a columnar body having a columnar lead plug or tin plug and disposed in a columnar hollow portion defined by at least an inner peripheral surface of said laminated body, wherein said laminated body includes, in addition to the rigid layers and the elastic layers, an annular thermal conductor which is interposed between an outer peripheral surface of said columnar body and an annular inner surface of the elastic layer in such a manner as to be in contact with the outer peripheral surface of said columnar body, the annular inner surface of the elastic layer, and at least one surface of a pair of rigid layers sandwiching the elastic layer and having a thermal conductivity higher than that of the elastic layer.

2. The seismic base isolation support apparatus according to claim 1, wherein the thermal conductor includes at least a polymer and a filler having a thermal conductivity higher than that of the elastic layer.

3. The seismic base isolation support apparatus according to claim 2, wherein the polymer includes at least one of a thermosetting polymer and a thermoplastic polymer.

4. The seismic base isolation support apparatus according to claim 3, wherein the thermosetting polymer includes at least one of a crosslinked rubber, an epoxy resin, a polyimide resin, a bismaleimide resin, a phenolic resin, an unsaturated polyester, a thermosetting polyphenylene ether, and a thermosetting modified polyphenylene ether.

5. The seismic base isolation support apparatus according to claim 3, wherein the thermoplastic polymer includes at least one of a thermoplastic synthetic resin and a thermoplastic elastomer.

6. The seismic base isolation support apparatus according to any one of claims 2 to 5, wherein the filler includes at least one of a carbon-based filler, a metallic filler, and a ceramic filler.

7. The seismic base isolation support apparatus according to any one of claims 1 to 6, wherein each of surfaces of the thermal conductor in contact with the respective surfaces of the pair of rigid layers sandwiching the elastic layer has an area of not less than 0.3% and not more than 6% of an area of each of the surfaces of the pair of rigid layers sandwiching the elastic layer.

8. The seismic base isolation support apparatus according to any one of claims 1 to 7, wherein the thermal conductor has a thermal conductivity of at least 1 W/m-K.

9. The seismic base isolation support apparatus according to any one of claims 1 to 8, wherein each of the plurality of rigid layers has a steel plate and a coating covering the steel plate and having a thermal conductivity greater than that of the steel plate, and the thermal conductor is disposed in contact with a surface of the coating.

10. The seismic base isolation support apparatus according to any one of claims 1 to 9, wherein said columnar body includes, in addition to the lead plug or the tin plug, a tubular rubber coating layer covering an outer peripheral surface of the lead plug or the tin plug and having an outer peripheral surface serving as the outer peripheral surface of said columnar body.
